**Europäisches Patentamt**

**European Patent Office**

**Office européen des brevets**

(19)

(11) Publication number:

**0 152 199**
**B1**

(12) # EUROPEAN PATENT SPECIFICATION

(45) Date of publication of patent specification: **03.08.88**

(51) Int. Cl.⁴: **B 31 B 39/60,** B 31 B 41/60

(21) Application number: **85300457.0**

(22) Date of filing: **24.01.85**

(54) **Reinforced plastic bags.**

(30) Priority: **26.01.84 CA 446144**

(43) Date of publication of application:
**21.08.85 Bulletin 85/34**

(45) Publication of the grant of the patent:
**03.08.88 Bulletin 88/31**

(84) Designated Contracting States:
**AT BE CH DE FR GB IT LI LU NL SE**

(56) References cited:
**EP-A-0 023 817**
**US-A-3 597 292**
**US-A-4 464 157**

(73) Proprietor: **TWINPAK INC.**
**2225 Hymus Boulevard**
**Dorval Quebec H9P 1J8 (CA)**

(72) Inventor: **Aubry Paul E.**
**361 rue Baillargeon Cap-de-la-Madeleine**
**Quebec G8T 6K9 (CA)**
Inventor: **Poklukar, Josef**
**520 Logan Avenue**
**St. Lambert Quebec H9P 2R3 (CA)**

(74) Representative: **Archer, Philip Bruce**
**Urquhart-Dykes & Lord Trinity Court Trinity**
**Street Priestgate**
**Peterborough Cambridgeshire PE1 1DA (GB)**

Courier Press, Leamington Spa, England.

## Description

The present invention relates to plastic tubing and in particular, to valve bags formed of plastic film material.

Plastic bags are used for packaging a number of materials and are particularly suitable for dry fluids. These bags are made of tubing formed from plastic film material and when the plastic tubing is formed into a bag, there is often a sealing strip (generally longitudinal) which is subjected to various stresses and/or strains and which strip will ultimately become the weak part of the bag. It is at this point that the valve is formed and breakage at this point of stress or strain frequently results unless the bag is suitably reinforced.

The manufacture of single and multi-walled plastic bags is, as aforementioned, well known in the art. In a single wall bag, a sheet of film is folded over longitudinally so that two edges overlap which can then be heat-sealed or glued as appropriate. The heat sealing operation utilizes conventional equipment and in the case of glueing, a band of glue is placed between the two overlapping walls or plies. When utilizing a multi-wall bag or tube, the overlapping edges of the plies or walls are offset from each other to allow for the introduction of the heat sealing or glueing equipment. This leads to a generally awkward arrangement and in most instances, an inherent weakness in the construction especially when forming a valve bag.

US—A—3 597 292 discloses a process of forming a tube by overlapping the side edges of a thermoplastic sheet and securing these together by molten resin applied between the edges which are then pressed together.

An object of the invention is to provide a method of making tubing and plastic bags having edge seals, together with tubing and plastic bags having reinforced areas along their edge seals, offering improvements in relation to one or more of the matters identified above, or generally.

According to the invention there is provided a method as defined in the accompanying claims.

In an embodiment of the present invention, there is provided a method of forming a multi wall plastic tubing which includes the steps of feeding first and second layers of a suitable plastic sheet material into proximity with each other. The first and second layers have their side edges generally in alignment with each other. Subsequently, a layer of reinforcing material is placed on at least one of the layers at each side edge on facing surfaces. The facing surfaces of the side edges are then placed into juxtaposition with each other and adhered together to form a seam along the side edges. The adhered edges are then folded over on each other in a tubing operation such that the adhered edges overlap each other; they in turn are then secured together in an overlapping configuration.

The plastic sheet materials utilized may be any suitable film of a plastic material, preferably thermoplastic, capable of being sealed according to the method of the invention. As will be appreciated by those skilled in the art, the preferred material is polyethylene. However, the two walls or layers forming the tube may be of a different material—i.e. since two separate plies are utilized in the double bag embodiment, the films may have different thicknesses be of different materials, and the like. One film may be pre-printed such that the other film protects the printed material thereon. The thicknesses of the film will be sufficient for the end use of the product.

As aforementioned, the first and second layers of thermoplastic sheet material are fed such that their side edges are generally in alignment. The thermoplastic films are then held apart and a reinforcing material is applied onto at least one of the edges of one of the films such that the edges may be subsequently be secured together. As will be appreciated, the reinforcing material may be applied onto both of the facing surfaces of the films.

The reinforcing material employed is a hot melt adhesive such as a low density polyethylene. If the films are treated on their surfaces, it may be preferable to leave an untreated surface where the hot melt adhesive is to be applied.

Subsequent to the application of the reinforcing material, the films may be then subject to a pressure at least at the edge portions to provide a suitable contact at the edges and adhesion thereof. Conveniently, the film may be passed between a pair of pressure rolls to thereby form a pair of seams at either side edge of the thermoplastic films.

Subsequently the multi wall structure is then folded over in a tubing operation as is well known in the art. In the tubing operation, the two secured side edges are overlapped and in turn secured together. To secure the two edge seams together, the application of hot melt adhesive is employed. It is also within the scope of the invention that a form of reinforcing material can be applied to the exterior surface of at least one of the layers of plastic sheet material which will then secure the multiwall structure into a multi wall tube.

Utilizing the above method in a multi wall structure, it has been found that the final longitudinal seam forming the tube is stronger than the prior art seams. During production, various operations were facilitated due to the construction which appeared to be stiffer on passing through the turntable and registration section on an ender thereby facilitating these operations.

One of the main advantages of the embodiment is that when the tubing is used as a valve bag, the valve seat is reinforced. In other words, the area or edge where the valve is attached to the tube and is stressed when the filling bag is inserted is a lot stronger than conventional bags and this is particularly true when the bag is used at lower temperature.

In the manufacture of a valve bag, valve components may be inserted to provide a valve structure

2

during the tubing operation. Thus, in one particular embodiment, one or more envelopes or tubes of a suitable material may be interposed between the two secured side edges during the tubing operation. This would then provide an entry into the interior of the bag which is formed by transverse cutting and sealing of the tubes. In one particular embodiment, a pair of valve tubes may be provided; a first one of a relatively short length of a relatively thick material to be secured to the overlapped edges with a longer more flexible inner portion providing the valve entrance per se.

The apparatus adapted to practice the present invention may consist of substantially conventional bag-forming machinery. Thus, there will be provided means for supplying a pair of films, means for guiding the same into proximity with each other, means for extruding a layer of hot melt adhesive between the edges of the films, means for securing the films together and conventional tubing means.

The method of the invention can also be applied to single wall bags. In such a case, one would lay down a band or seam of a reinforcing material on each side of the film. The film is then passed over conventional tubing machinery such that the two bands or seams of reinforcing material overlap each other and a layer of hot melt adhesive is extruded between the two bands or seams to form a single wall tube or bag. The bag is then reinforced at its critical points.

Having thus generally described the invention, reference will be made to the accompanying drawings illustrating embodiments thereof in which:—

Figure 1 is a cross-sectional view of the seam area of a conventional multi walled tube or bag;

Figure 2 is a cross-sectional view of the seam area of a multi-wall tube or bag according to the present invention;

Figure 3 is a cross-sectional view of the valve area of a multi-wall bag;

Figure 4 is a perspective view of an apparatus for forming the multi wall tube or bag of the present invention;

Figure 5 is a perspective view of an apparatus used for forming a single walled tube;

Figure 6 is a sectional view taken along the lines 6—6 of Figure 5; and

Figure 7 is a cross-sectional view of the single walled film used in the embodiment of Figures 5 and 6.

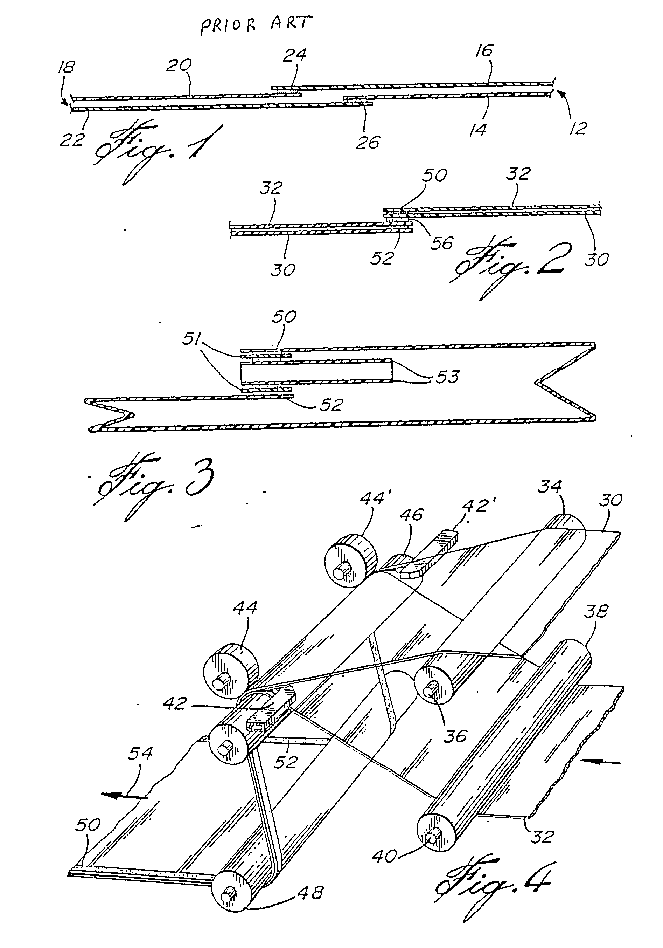

Referring to the drawings in greater detail and by reference characters thereto, Figure 1 illustrates a prior art sealing arrangement for a double wall tubed bag. In this arrangement, a first panel 12 having walls or layers 14 or 16 is overlapped with a second panel 18 having walls or layers 20 and 22. As may be seen from Figure 1, the sealing arrangement is such that plies 20 and 22 are offset with respect to each other as are plies 14 and 16. The upper surface of ply 20 is secured to the lower surface of ply 16 by hot melt adhesive 24. Similarly, a strip of hot melt adhesive 26 secures the upper surface of ply 22 to the lower surface of ply 14. Thus, two separate seals are provided in the making of a double wall tubed bag.

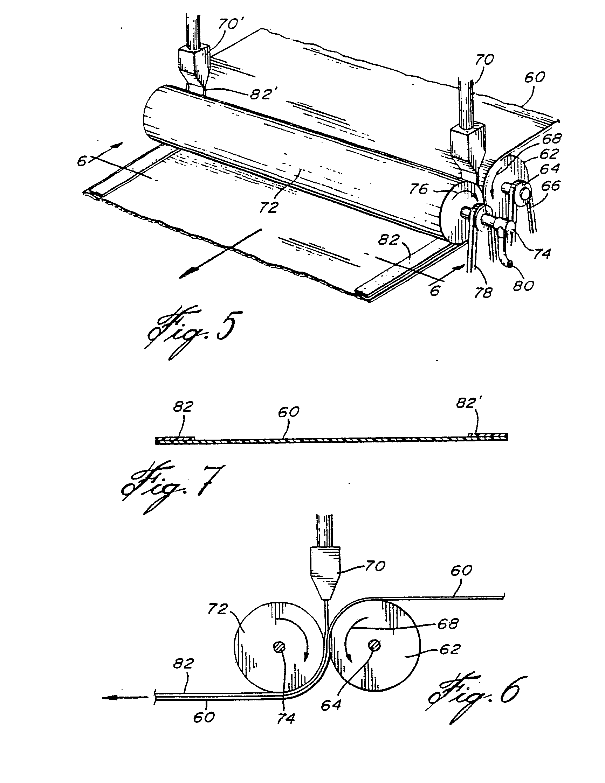

As shown in Figure 4, a first film layer 30 is provided from a source of the same, is passed over guide roller 34 journalled on shaft 36. A second film layer 32 is similarly passed over guide roll 38 which is journalled on shaft 40. Layers 30 and 32 then converge to pass over roll 46 as may be seen in Figure 4.

Before the point of convergement of layers 30 and 32 extruder nozzles 42, 42' are provided on each side of the sheet material 30, 32 and a layer of a suitable reinforcing material is applied to the facing surfaces of layers 30, 32. Pressure rolls 44, 44' are situated at either side of the sheet material.

Thus, at either side of sheet material 30, 32 a reinforced area generally designated by reference numerals 50 and 52 is provided, at which reinforced area the films are subsequently secured together. The double walled material is passed over guide roller 48 to a tuber as designated by arrow 54.

At the tuber (not shown), the side edges or reinforced areas of the double walled material are overlapped in a conventional manner and are secured together by hot melt adhesive. Thus, one obtains the structure shown in Figure 2 wherein at the seam of the tube or bag, an extremely strong structure is obtained with adhesive 56 joining the double walled structure together.

When forming a valve bag, valve components are inserted between the reinforced areas of the double walled material prior to securing the reinforced areas together in the tuber. Thus, having reference to Figure 3 illustrating the valve structure, a first outer valve component 51 is inserted between reinforced areas 50 and 52 and which component 51 is secured to the reinforced areas. In turn there is an inner valve component 53 secured to outer valve component 51. In practice, it is preferred that inner valve component 53 be of a thinner slightly more flexible material than outer valve component 51 and it will at the same time, extend into the interior of the tube or bag further than outer component 51.

The practice of the present invention can also be utilized in a single wall bag to provide greater strength characteristics than conventional bags or tubes. When or if required, bags of more than two walls can also be made in accordance with this invention.

Figure 5 illustrates the use of the method as it is applied to a single wall bag. In this method, sheet material 60 is passed over a back-up roll 62 journalled on shaft 64 which is driven by means of belt 66. Back-up roll 62 rotates in the direction indicated by arrow 68. At either side of continuous film 60, are a pair of extruders 70, 70' extruding a reinforcing material 82, 82' on an upper surface of the film 60.

A cooling roll generally designated by reference numeral 72 rotates in the direction indicated by arrow 76 to drive belt 78 rotating shaft 74. Means generally designated by reference character 80 are utilized to provide a cooling fluid to the interior of cooling roll 72.

As will be appreciated, suitable inlet and outlet means for the cooling fluid are provided.

Following placement of reinforcing material 82, 82' on the side edges of film 60, the material is

# 0 152 199

advanced to a conventional tuber (not shown) wherein the edges are overlapped and secured together. As in the case of the double wall tube or bag, a layer of hot melt adhesive is utilized.

Utilizing the present invention, it is possible to use the reinforced tubing as a plastic pipe conduit or gas pocket with the seams or reinforced edges being used to support the conduit or pocket such that nails, screws or other fasteners could be inserted in or attached to these seams whereby they can function as lugs. A double wall construction may be used in greenhouse construction wherein the space between the two walls can be filled with air for insulation purposes or alternatively for heating. Still further, the tube could be suitably inflated to provide cushioning or other effects where desired.

The bags of the present invention were thin tested in comparison to bags manufactured according to the prior art teachings.

In test No. 1 double wall machine made gusseted bags (355 mm×100 mm×615 mm) were filled with 25 kgs of material and cooled in a deep freeze to the temperature indicated. The bags were then dropped 4 feet as per the type of drop indicated in Table I. Bags 1 to 6 were gusseted bags of 5.7 mil thickness and manufactured according to the present invention; bags 7 and 8 were gusseted bags of 6 mil thickness manufactured according to the prior art. The results are as follows:

TABLE I

| Bag # | Flat drop | Edge drop | Valve drop | Bottom drop | Temp. °F | Bag failed at: |
|---|---|---|---|---|---|---|
| 1 | 2 | 4 | 1 | 1 | +2 | Did not break |
| 2 | 4 | 6 | 1 | 1 | +4 | " |
| 3 | 4 | 4 | 2 | 4 | −4 | " |
| 4 | 4 | 4 | 2 | 4 | −4 | " |
| 5 | 4 | 4 | 2 | 3 | −2 | " |
| 6 | 4 | 4 | — | — | −2 | Bottom seal |
| 7 | 4 | 1 | — | — | +4 | Bottom seal |
| 8 | 4 | 1 | — | — | −4 | Top seal |

In a second test, the prior art bags and bags according to the present invention were filled with 25 kg of material, frozen and were dropped a distance of 4 feet at temperatures varying between −3°F to +6°F until they failed. The types of drops were varied. Gusseted bags (15-1/8"×25") formed of 3 mil material and being double wall according to the prior art failed after an average of 1.63 drops. Gusseted bags (12-1/2"×4"×28") formed of 3 mil material and being double walled according to the present invention averaged 5.0 drops prior to failure.

## Claims

1. A method of continuously forming tubing comprising the steps of:
a) providing a layer of plastic sheet material (30, 32; 60) to form the wall for said tubing;
b) folding said wall so that the outer edges thereof are brought into overlapping relationship to produce a tubular form in said sheet material; and
c) applying securing means to said overlapping edges to produce said tubing by securing said edges together with a seam; characterised by the steps of:
d) prior to formation of said seam, continuously applying two separate supplies of a reinforcing material (50, 52; 82, 82') to said plastic sheet material, one such supply to each of the longitudinal side edges of the sheet material so as to form two lengthwise extending reinforced zones in the sheet material, one zone at each edge thereof;
e) said reinforcing material comprising a hot melt adhesive, and the step of applying same comprising continuously extruding the hot melt adhesive onto said sheet material;
f) bringing said edge-reinforced zones into superimposed relationship to produce said tubular form in the sheet material; and
g) applying said securing means (56) comprising a third supply of hot melt adhesive to said superimposed reinforced zones to continuously secure same together whereby in the seamed area the tubing comprises a structure formed from at least five overlapping layers namely said two layers of said sheet material (30, 32; 60) and three layers of said reinforcing material (50, 52, 56).

2. A method according to claim 1 characterised in that said layer of plastic sheet material comprises

4

first and second layers (30, 32) of said sheet material having their side edges generally in alignment, and said supplies of hot melt adhesive (50, 52) are applied to the edges of said sheet material between said layers.

3. A method according to claim 1 or claim 2 characterised by the step of cooling said first two supplies of hot melt adhesive after application to said plastic sheet material and prior to formation of said seam.

4. A method according to claim 3 characterised in that said step of cooling said hot melt adhesive is performed by means of a cooling roller.

5. A method according to any one of the preceding claims characterised by the step of inserting a valve component (51, 53) between said reinforced zones prior to forming said seam.

6. A method according to claim 1 characterised in that said tubing has a double wall structure, the method comprising the steps of feeding said plastic sheet material (30, 32) in the form of at least first and second layers of a thermoplastic sheet material into proximity to each other, said first and second layers having their side edges generally in alignment, extruding said supply of reinforcing material (50, 52) in the form of a layer on at least one facing surface of at least one layer of said sheet material at each side edge thereof in a continuous in-line operation, said layer of reinforcing material being extruded in the form of a band of a predetermined width and thickness which is sufficient to form and function as a reinforcing layer to reinforce the adjoined edges juxtaposing and adhering said side edges together such that said first and second layers of sheet material form a double wall structure having said first and second layers spaced apart at their edges by said layer of reinforcing material, and the layer of reinforcing material still retaining sufficient width and thickness after adhering said side edges together to function as a reinforcing layer in the tube, the method further comprising the step of folding one of said pair of adhered edges over to form a double wall tube with said adhered edges overlapping each other, extruding said third supply of hot melt adhesive (56) as a further layer of reinforcing material on a facing surface of at least one of said overlapped edges, and securing said overlapped edges together along at least a portion of the length of said secured edges overlapped, thereby to form a tubing structure having four layers of overlapped sheet material with a reinforcing layer intermediate each adjacent sheet material layer.

7. A method according to claim 6 characterised in that each of said reinforcing layers has a width of between five to fifty millimetres and a thickness of between two to five mils.

8. A method according to claim 6 or claim 7 characterised in that said first and second layers of thermoplastic material (30, 32) are a polyethylene material.

9. A method according to any one of claims 6 to 8 characterised by the step of passing said side edges between a pair of pressure rolls (44, 46; 44', 46) and applying sufficient pressure to adhere the first and second layers (50, 52) together, but with the layer of reinforcing material retaining a sufficient width and thickness to function as a reinforcing layer.

10. A method according to any one of claims 6 to 9 characterised by the step of placing a valve component (51) intermediate said overlapped edges and extruding a layer of reinforcing material between an outer surface of said valve component and an overlapped edge, and securing said valve component to said overlapped edge, and said reinforcing layer (50, 52) around said valve component also having sufficient thickness to function as a reinforcing layer to reinforce the securing of the valve component.

11. A method according to claim 10 characterised in that said valve component comprises inner and outer sleeves (53, 51) with the inner sleeve (53) being formed of a thinner and more flexible material than said outer sleeve (51), the method including the step of securing said outer sleeve to said overlapped edge while permitting said inner sleeve to extend inwardly a greater distance than said outer sleeve.

12. A method according to any one of claims 6 to 11 characterised in that at least one additional layer of reinforcing material is extruded upon each of the first material layers (50, 52) of reinforcing material at the side edges of the sheet material before the first and second layers of sheet material are juxtaposed and adhered.

13. A plastic bag, for example a valve bag, characterised in that said bag comprises tubing made by a method according to any one of the preceding claims.

**Patentansprüche**

1. Verfahren zum kontinuierlichen Bilden von Schläuchen umfassend die Stufen:

a) Zuführen einer Lage aus Kunststoffbahnwerkstoff (30, 32; 60) zur Bildung der Wand des Schlauches;

b) Falten dieser Wand, so daß die Außenränder derselben zur Bildung einer schlauchförmigen Form in dem Bahnwerkstoff in eine einander überlappende Stellung gebracht werden; und

c) Aufbringen von Verbindungsmitteln auf diese überlappenden Ränder zur Bildung des Schlauches, indem diese Ränder miteinander durch eine Naht verbunden werden;

gekennzeichnet durch die Stufen:

d) Kontinuierliches Aufbringen von zwei getrennten Vorräten eines Verstärkungsmaterials (50, 52; 82, 82') auf den Kunststoffbahnwerkstoff vor der Bildung der Naht, einen solchen Vorrat auf jeden der Längsseitenränder des Bahnwerkstoffes, um so zwei sich in Längsrichtung erstreckende verstärkte Zonen im Bahnwerkstoff zu bilden, eine Zone an jedem Rand desselben,

e) wobei das Verstärkungsmaterial einen Heißschmelzkleber umfaßt und die Stufe des Aufbringens desselben eine kontinuierliche Extrusion des Heißschmelzklebers auf den Bahnwerkstoff umfaßt:

5

f) Verbringen der verstärkten Randzonen in eine übereinander angeordnete Realtivlage, um im Bahnwerkstoff die schlauchförmige Form zu bilden; und

g) Aufbringen der Verbindungsmittel (56) umfassend einen dritten Vorrat an Heißschmelzkleber auf die übereinanderliegenden, verstärkten Zonen, um diese kontinuierlich miteinander zu verbinden, wobei der Schlauch im Nahtbereich eine Struktur aufweist, die von wenigstens fünf übereinanderliegenden Lagen, nämlich den beiden Lagen des Bahnwerkstoffes (30, 32; 60) und drei Lagen des Verstärkungsmaterials (50, 52, 56) gebildet ist.

2. Verfahren nach Anspruch 1, dadurch gekennzeichnet, daß die Lage aus Kunstoffbahnwerkstoff erste und zweite Lagen (30, 32) des Bahnwerkstoffs umfaßt, die ihre Seitenränder im wesentlichen zueinander ausgerichtet haben, und daß die Vorräte an Heißschmelzkleber (50, 52) zwischen diesen Lagen auf die Ränder des Bahnwerkstoffes aufgebracht werden.

3. Verfahren nach Anspruch 1 oder Anspruch 2, gekennzeichnet durch die Stufe des Kühlens der ersten zwei Vorräte an Heißschmelzkleber nach dem Auftragen auf den Kunststoffbahnwerkstoff und vor der Bildung der Naht.

4. Verfahren nach Anspruch 3, dadurch gekennzeichnet, daß das Kühlen des Heißschmelzklebers mit Hilfe einer Kühlwalze ausgeführt wird.

5. Verfahren nach einem der vorhergehenden Ansprüche, gekennzeichnet durch die Stufe des Einsetzens eines Ventilteils (51, 53) zwischen die verstärkten Zonen vor dem Bilden der Naht.

6. Verfahren nach Anspruch 1, dadurch gekennzeichnet, daß der Schlauch eine Doppelwandstruktur besitzt, wobei das Verfahren die Stufen des Zuführens des Kunststoffbahnwerkstoffes (30, 32) in Form von wenigstens erster und zweiter Lagen aus einem thermoplastischen Bahnwerkstoff in die Nähe zueinander, wobei die ersten und zweiten Lagen ihre Seitenränder im wesentlichen zueinander ausgerichtet haben, und des Extrudierens des Vorrates von Verstärkungsmaterial (50, 52) in Form einer Lage auf wenigstens eine der einander zugekehrten Seiten von wenigstens einer Lage des Bahnwerkstoffs an jedem Seitenrand desselben in einer kontinuierlichen, zwischengeschalteten Arbeitsstufe umfaßt, wobei die Lage aus Verstärkungsmaterial in Form eines Streifens mit vorbestimmter Breite und Dicke extrudiert wird, die hinreicht, um als Verstärkungslage zu dienen und zur Verstärkung der aneinandergrenzenden, übereinanderliegenden Ränder und zum Verkleben dieser Seitenränder aneinander zu wirken, so daß die erste und die zweite Lage aus Bahnwerkstoff eine Doppelwandstruktur bilden, in der die erste und die zweite Lage an ihren Rändern voneinander durch die Lage aus Verstärkungsmaterial im Abstand voneinander gehalten sind, und wobei die Lage aus Verstärkungsmaterial nach dem Verkleben der Seitenränder miteinander eine hinreichende Breite und Dicke beibehält um als Verstärkungslage im Schlauch zu wirken, wobei das Verfahren weiters den Schritt des Faltens von einem Paar von verklebten Rändern zur Bildung eines doppelwandigen Schlauches, wobei die verklebten Ränder einander überlappen, des Extrudierens des dritten Vorrates an Heißschmelzkleber (56) als weitere Lage aus Verstärkungsmaterial auf eine zugekehrte Seite von wenigstens einem der überlappenden Ränder, und des Befestigens der überlappenden Ränder aneinander längs wenigstens eines Teils der Länge der übereinanderliegenden verklebten Ränder, umfaßt, so daß so eine Schlauchstruktur gebildet wird, die vier Lagen aus übereinanderliegenden Bahnwerkstoff mit einer Verstärkungslage zwischen jeder aneinandergrenzenden Bahnwerkstofflage besitzt, gebildet.

7. Verfahren nach Anspruch 6, dadurch gekennzeichnet, daß jede der Verstärkungslagen eine Breite zwischen fünf und fünfzig Millimetern und eine Dicke zwischen zwei und fünf Mils besitzt.

8. Verfahren nach Anspruch 6 oder Anspruch 7, dadurch gekennzeichnet, daß die erste und die zweite Lage aus thermoplastischem Werkstoff (30, 32) ein Polyethylenwerkstoff ist.

9. Verfahren nach einem der Ansprüche 6 bis 8, gekennzeichnet durch die Stufe des Führens der Seitenränder zwischen einem Paar von Druckrollen (44, 46; 44', 46) und des Aufbringens von hinreichendem Druck, um die erste und die zweite Lage (50, 52) miteinander zu verbinden, wobei jedoch die Verstärkungslage eine zur Funktion als Verstärkungslage hinreichende Breite und Dicke beibehält.

10. Verfahren nach einem der Ansprüche 6 bis 9, gekennzeichnet durch den Verfahrensschritt des Anbringens eines Ventilteils (51) zwischen die übereinanderliegenden Ränder und des Extrudierens einer Lage von Verstärkungsmaterial zwischen eine Außenfläche des Ventilteils und einem darüberliegenden Rand und des Befestigens des Ventilteils am darüberliegenden Rand, wobei die Verstärkungslage (50, 52) um diesen Ventilteil auch eine hinreichende Dicke besitzt, um als Verstärkungslage zur Verstärkung der Befestigung des Ventilteils zu wirken.

11. Verfahren nach Anspruch 10, dadurch gekennzeichnet, daß der Ventilteil innere und äußere Hülsen (53, 51) umfaßt, wobei die innere Hülse (53) aus einem dünneren und flexibleren Werkstoff als die äußere Hülse (51) gebildet ist, wobei das Verfahren die Stufe des Befestigens der äußeren Hülse am übereinanderliegenden Rand umfaßt, während sich die innere Hülse weiter nach innen erstrecken kann als die äußere Hülse.

12. Verfahren nach einem der Ansprüche 6 bis 11, dadurch gekennzeichnet, daß wenigstens eine zusätzliche Lage aus Verstärkungsmaterial auf jede der ersten Werkstofflagen (50, 52) aus Verstärkungsmaterial an den Seitenrändern des Bahnmaterials extrudiert wird, bevor die ersten und zweiten Lagen des Bahnwerkstoffs übereinander gelegt und verklebt werden.

13. Ein Kunststoffbeutel, beispeilsweise ein Ventilsack, dadurch gekennzeichnet, daß der Beutel einen

**0 152 199**

Schlauch umfaßt, der nach dem Verfahren gemäß einem der vorhergehenden Ansprüche hergestellt worden ist.

**Revendications**

1. Procédé pour la fabrication continue d'un tube, qui comprend les opérations de:
a) amenée d'une couche de matière plastique en feuille (30, 32; 60), pour constituer la paroi dudit tube;
b) pliage de ladite paroi de sorte que ses bords extérieurs viennent en chevauchement, pour engendrer une forme tubulaire dans ladite feuille; et
c) application de moyens de fixation auxdits bords en chevauchement, pour produire ledit tube par fixation desdits bords l'un à l'autre suivant une jonction;
caractérisé par les opérations de
d) avant la formation de ladite jonction, application continue de deux alimentations distinctes d'une matière de renforcement (50, 52; 82, 82') à ladite feuille de matière plastique, à raison d'une telle alimentation sur chacun des bords longitudinaux de la feuille de façon à engendrer deux zones renforcées longitudinales dans la feuille, une zone à chaque bord de celle-ci;
e) ladite matière de renforcement étant un adhésif fondant à chaud, et l'opération d'application de la matière de renforcement comprenant l'extrusion continue de l'adhésif fondant à chaud sur ladite feuille;
f) amenée desdites zones de bord renforcées en superposition mutuelle, pour produire ladite forme tubulaire dans la feuille; et
g) application desdits moyens de fixation (56) par une troisième alimentation d'adhesif fondant à chaud sur lesdites zones renforcées superposées, pour les fixer l'une à l'autre de façon continue, de sorte que, dans la région de jonction, le tube comprend une structure constituée d'au moins cinq couches superposées, à savoir deux couches de dite feuille (30, 32; 60) et trois couches de dite matière de renforcement (50, 52, 56).

2. Procédé suivant la revendication 1, caractérisé en ce que ladite couche de matière plastique en feuille comprend une première et une deuxième couches (30, 32) de dite matière en feuille ayant leurs bords latéraux sensiblement en alignement, et lesdites alimentations d'adhésif fondant à chaud (50, 52) sont appliquées aux bords de ladite matière en feuille, entre lesdites couches.

3. Procédé suivant la revendication 1 ou la revendication 2, caractérisé par l'opération de refroidissement desdites deux premières alimentations d'adhésif fondant à chaud, après l'application à ladite matière plastique en feuille et avant la formation de ladite jonction.

4. Procédé suivant la revendication 3, caractérisé en ce que ladite opération de refroidissement dudit adhésif fondant à chaud est effectuée au moyen d'un rouleau de refroidissement.

5. Procédé suivant l'une quelconque des revendications précédentes, caractérisé par l'opération d'insertion d'un composant de valve (51, 53) entre lesdites zones renforcées, avant la formation de ladite jonction.

6. Procédé suivant la revendication 1, caractérisé en ce que ledit tube a une structure à double paroi, le procédé comprenant les opérations d'amenée de ladite matière plastique en feuille (30, 32) sous la forme d'au moins une première et une deuxième couches d'une matière thermoplastique en feuille à proximité l'une de l'autre, lesdites première et deuxième couches ayant leurs bords latéraux sensiblement en alignement, d'extrusion de ladite alimentation de matière de renforcement (50, 52) sous la forme d'une couche sur au moins une surface en regard d'au moins une couche de dite matière en feuille à chaque bord latéral de celle-ci dans une opération continue en ligne, ladite couche de matière de renforcement étant extrudée sous la forme d'une bande de largeur et d'épaisseur prédéterminées qui est suffisante pour former et agir comme une couche de renforcement de manière à renforcer les bords joints, de juxtaposition et de collage desdits bords latéraux ensemble de sorte que lesdites première et deuxième couches de matière en feuille constituent une structure à double paroi dans laquelle lesdites première et deuxième couches sont espacées l'une de l'autre à l'endroit de leurs bords par ladite couche de matière de renforcement, et la couche de matière de renforcement conservant encore une largeur et une épaisseur suffisantes, après le collage desdits bords latéraux l'un à l'autre, pour agir comme couche de renforcement dans le tube, le procédé comprenant en outre l'opération de rabattement d'un des deux bords collés pour former un tube à double paroi avec chevauchement mutuel desdits bords collés, l'extrusion de ladite troisième alimentation d'adhésif fondant à chaud (56) comme une autre couche de matière de renforcement sur une surface en regard d'au moins un desdits bords en chevauchement, et la fixation desdits bords en chevauchement l'un à l'autre le long d'au moins une partie de la longueur desdits bords fixés en chevauchement, de manière à constituer une structure tubulaire comportant quatre couches de matière en feuille en chevauchement, avec une couche de renforcement entre chaque couche de matière en feuille adjacente.

7. Procédé suivant la revendication 6, caractérisé en ce que chacune desdites couches de renforcement a une largeur comprise entre 5 et 50 mm et une épaisseur comprise entre 0,05 mm et 0,13 mm.

8. Procédé suivant la revendication 6 ou la revendication 7, caractérisé en ce que lesdites première et deuxième couches de matière thermoplastique (30, 32) sont en polyéthylène.

9. Procédé suivant l'une quelconque des revendications 6 à 8, caractérisé par l'opération de passage desdits bords latéraux entre deux rouleaux de pression (44, 46; 44', 46) et d'application d'une pression

**0 152 199**

suffisante pour coller les première et deuxième couches (50, 52) l'une à l'autre, mais la couche de matière de renforcement conservant une largeur et une épaisseur suffisantes pour agir comme une couche de renforcement.

10. Procédé suivant l'une quelconque des revendications 6 à 9, caractérisé par l'opération d'insertion d'un composant de valve (51) entre lesdits bords en chevauchement et d'extrusion d'une couche de matière de renforcement entre une surface extérieure dudit composant de valve et un bord en chevauchement, et la fixation dudit composant de valve audit bord en chevauchement, ladite couche de renforcement (50, 52) autour dudit composant de valve ayant également une épaisseur suffisante pour agir comme couche de renforcement de manière à renforcer la fixation du composant de valve.

11. Procédé suivant la revendication 10, caractérisé en ce que ledit composant de valve comprend un manchon intérieur (53) et un manchon extérieur (51), le manchon intérieur (53) étant constitué d'une matière plus mince et plus souple que celle dudit manchon extérieur (51), le procédé comprenant l'opération de fixation dudit manchon extérieur audit bord en chevauchement tout en permettant audit manchon intérieur de s'étendre vers l'intérieur du sac plus loin que ledit manchon extérieur.

12. Procédé suivant l'une quelconque des revendications 6 à 11, caractérisé en ce qu'au moins une couche supplémentaire de matière de renforcement est extrudée sur chacune des premières couches (50, 52) de matière de renforcement à l'endroit des bords latéraux de la matière en feuille, avant la juxtaposition et le collage des première et deuxième couches de matière en feuille.

13. Sac en matière plastique, par exemple un sac à valve, caractérisé en ce que ledit sac est constitué d'un tube fabriqué par un procédé suivant l'une quelconque des revendications précédentes.

8

0 152 199

PRIOR ART

Fig. 1

Fig. 2

Fig. 3

Fig. 4

1

0 152 199

Fig. 5

Fig. 7

Fig. 6

2